# EUROPÄISCHE PATENTANMELDUNG

(11) **EP 1 160 493 A1**
(43) Veröffentlichungstag der Anmeldung: **05.12.2001**
(21) Anmeldenummer: 01112195.1
(22) Anmeldetag: 18.05.2001
(51) Int. Cl.: F16K 1/02, F16K 31/50, F16K 31/528, F16K 39/02

(54) **Ventil**

(30) Priorität: 02.06.2000 DE 10027598
(71) Anmelder: Pister Kugelhähne GmbH, 76457 Muggensturm (DE)
(72) Erfinder: Rahner, Franz, 76316 Malsch (DE); Hiss, Helmut, 75228 Ispringen (DE)
(74) Vertreter: Durm, Frank, Dipl.-Ing.

(57) **Zusammenfassung**

Die Erfindung betrifft ein Ventil 1 das zum Aufheben einer zwischen Gewinden der Ventilteile entstehenden Selbsthemmung beim Öffnen des Ventils 1 ein Zwischengetriebe 12 aufweist, das zwischen einem Betätigungselement 10 und einer Gewindespindel 11 eines Dichtkörpers 6 angeordnet ist. Um den Dichtkörper von seiner Dichtstellung D in Richtung auf seine Offenstellung vom Dichtsitz 7 abzuheben, erzeugt das Zwischengetriebe 12 eine Relativbewegung in Richtung der Längsachse L des Ventils 1 zwischen dem Betätigungselement 10 und der Gewindespindel 11, die den Dichtkörper 6 antreibt.

## Beschreibung

Die Erfindung betrifft ein Ventil gemäß dem Oberbegriff des Anspruches 1.

Ein gattungsgemäßes Ventil, das auch als Sitzventilpatrone bezeichnet wird, kann beispielsweise in einer Aufnahmebohrung eines Hydraulikblockes eingesteckt und durch Verschraubung gesichert werden. Beim Auftreten hoher Fluiddrücke, die auf Seiten der stirnseitigen Öffnung des Gehäuses des Ventiles bis zu 320 bar betragen können, kann es trotz eines gewissen Druckausgleiches im Innenraum des Ventiles zu einem Verkeilen bzw. Verklemmen des Ventils kommen, wenn bei geschlossenem Ventil der vorher auf die untere Dichtkörperseite und hintere Kolbenseite wirkende Druck abfällt. Dies bedeutet, dass insbesondere bei handbetätigten gattungsgemäßen Ventilen ein Öffnen nicht mehr möglich wird.

Es ist daher Aufgabe der vorliegenden Erfindung, ein Ventil der im Oberbegriff des Anspruches 1 angegebenen Art zu schaffen, das selbst beim Auftreten hoher Drücke und einer daraus resultierenden Verklemmung der den Dichtkörper antreibenden Gewindespindel problemlos von der Dichtstellung in die Offenstellung überführt werden kann.

Die Lösung dieser Aufgabe erfolgt durch die Merkmale des Anspruches 1.

Erfindungsgemäß wird ein Ventil geschaffen, das insbesondere als Sitzventilpatrone bzw. Eckventil für Hydraulikblöcke mit hohen bzw. extrem hohen Hydraulikdrücken ausgebildet ist.

Das erfindungsgemäße Ventil weist zur Überwindung einer möglicherweise auftretenden Verklemmung der Gewindespindel ein Zwischengetriebe auf, dessen Anordnung innerhalb der Antriebseinrichtung des Ventiles es ermöglicht, eine Relativbewegung zwischen dem Mitnehmer bzw. dem Betätigungselement und der Gewindespindel zu erzeugen, die in Richtung der Längsachse der Gewindespindel gerichtet ist.

Das Funktionsprinzip des erfindungsgemäßen Ventiles beruht auf folgendem: Bei stirnseitigem Druck wird der Kolben der Antriebseinrichtung von Hydraulikflüssigkeit umspült und ein Teil des Zwischengetriebes nach außen an einen Sicherungsbund gepresst. Wird das Ventil geschlosssen, wird das axiale Spiel seiner beweglichen Teile aufgehoben. Bei Druckentlastung will sich das axiale Spiel wieder einstellen und die durch den vorherigen Druck auf die Schaltwelle erzeugte axiale Kraft wirkt nun auf die Gewindegänge und den Dichtsitz. Daher befindet sich das System in diesem Zustand in der Selbsthemmung, kann jedoch trotzt der hohen wirkenden Kräfte und den daraus resultierenden Reibungsmomenten der Gewindespindel durch das Zwischengetriebe leicht gelöst werden. Erfindungsgemäß wird somit das Prinzip der schiefen Ebene angewandt, bei der ab einem gewissen Winkel die Reibung zwischen der schiefen Ebene und einem auf ihr liegenden Körper aufgehoben wird und somit der Körper zu rutschen beginnt.

Aus der DE 38 90 870 C2 ist zwar ein Gasflaschenventil bekannt, das zwischen einem ein Betätigungselement darstellenden Drehknopf und einer Betätigungswelle sowie einem muffenförmigen Bauteil eine Mitnehmereinrichtung aufweist, die bei Betätigung ein Verbindungsstück freigibt, sodass sich ein Ventilkegel auf Grund des anliegenden Gasdruckes vom Ventilsitz abheben kann; jedoch wird diese Bewegung nicht durch die Mitnehmereinrichtung erzeugt, sondern ist eine Folge des Gasdrucks.

Aus der DE-AS 1 007 588 ist ein Ventil bekannt, bei dem durch eine besondere Form einer Kullissenführung eine Drehbewegung in eine Linearbewegung von großem Weg und am Ende der Drehbewegung in kleinen Weg und großer Andruckkraft konvertiert wird. Der Stift der Kullissenführung läuft hierbei in einer Längsnut des Gehäuses.

Die Unteransprüche haben vorteilhafte Weiterbildungen der Erfindung zum Inhalt.

Bei einer besonders bevorzugten Ausführungsform weist das Zwischengetriebe einen Mitnehmer auf, der an einem seiner Enden mit dem Betätigungselement des Ventilantriebs verbunden ist. Am anderen Ende ist der Mitnehmer mit einer Schaltwelle versehen, die zumindest eine Kulisse bzw. Nut aufweist, die in einem spitzen Winkel zu einer horizontalen Ebene angeordnet ist, die wiederum senkrecht zur Längsachse des Ventils und insbesondere zu derjenigen der Gewindespindel liegt. In der Kulisse bzw. Nut ist ein Stift angeordnet, der seinerseits mit der Gewindespindel verbunden ist. Diese Ausführungsform stellt eine besonders bevorzugte Konstruktion dar, da sie die Vorteile eines besonders einfachen Aufbaues und einfach herzustellender Einzelteile mit dem Vorteil hoher Funktionssicherheit und Effizienz verbindet.

Vorzugsweise ist die Schaltwelle als Hülse ausgebildet, die auf einen glatten gewindefreien Endabschnitt der Gewindespindel aufgesetzt wird. Die Hülse stellt bei dieser Ausführungsform einen einseitig offenen Zylinder dar, in dessen offene Stirnseite der gewindefreie Endabschnitt der Gewindespindel eingeführt wird und die in ihrer Mantelfläche zumindest eine Nut bzw. Kulisse aufweist, in der der mit der Gewindespindel verbundene Stift bei der zuvor beschriebenen Bewegung zwischen der Schließstellung und Offenstellung und in umgekehrter Richtung gleitet.

Ein bevorzugtes Winkelmaß für die Anordnung der Kulisse relativ zu zuvor definierten Horizontalen beträgt etwa 7 ° und weniger.

Vorzugsweise weist die Hülse zwei einander gegenüberliegende Kulissen auf, in die die Endabschnitte eines den gewindefreien Abschnitt der Gewindespindel durchgreifenden Stiftes eingreifen.

Bei einer weiteren besonders bevorzugten Ausführungsform des erfindungsgemäßen Ventils weist der Kolben, an dem der Dichtkörper befestigt ist, an seinem dem Dichtkörper gegenüber angeordneten Ende einen vieleckigen Führungsabschnitt auf, der vorzugsweise als Außenvierkant oder Sechskant ausgebildet ist. Dieser Führungsabschnitt ist in einer komplementär ausgebildeten Führungshülse angeordnet, die wiederum im Gehäuse des Ventils fixiert ist. Die Gewindespindel greift in ein Innengewinde des Führungsabschnittes ein. Durch diese Konstruktion kann eine reine Längsbewegung des Dichtkörpers bei Drehung der Gewindespindel erreicht werden, ohne dass sich der Dichtkörper mitdreht. Dies hat den besonderen Vorteil, dass eine Beschädigung des Dichtsitzes durch den aus gehärtetem Material bestehenden Dichtkörper verhindert wird.

Zu den weiteren besonderen Vorteilen des erfindungsgemäßen Ventiles zählt, dass als Betätigungselement der Antriebseinrichtung für den manuellen Betrieb lediglich ein Handrad, von beispielsweise 70 mm Durchmesser, ausreichend ist. Insbesondere zeichnet sich das erfindungsgemäße Ventil somit durch eine sehr kleine Bauweise aus. Sollte eine leichte Exzentrizität der Ventilteile auftreten, kann diese durch das Radialspiel des Dichtkörpers ausgeglichen werden.

Bei einer weiteren besonders bevorzugten Ausführungsform kann eine zwischen dem Gehäuse und dem Kolben eingebaute Druckfeder das Axialspiel der Ventilteile ausgleichen, so dass beim Schließen des Ventils kein Dichtkörperflattern auftritt, das ansonsten durch den entstehenden Unterdruck im Bereich der Dichtkante aufgrund der sich ergebenden Querschnittsverengung auftreten könnte.

Weitere Einzelheiten, Merkmale und Vorteile der Erfindung ergeben sich aus nachfolgender Beschreibung eines Ausführungsbeispiels anhand der Zeichnung.

Es zeigen:
- Figur 1: einen Längsschnitt durch eine Ausführungsform des erfindungsgemäßen Ventils in der Dichtstellung,
- Figur 2: eine der Figur 1 entsprechende Darstellung in einer Stellung am Beginn der Öffnung des Ventils,
- Figur 3: eine der den Figuren 1 und 2 entsprechende Darstellung in der Offenstellung des erfindungsgemäßen Ventiles, und
- Figur 4: eine schematisch vereinfachte Prinzipdarstellung der Funktionsweise des erfindungsgemäßen Ventils.

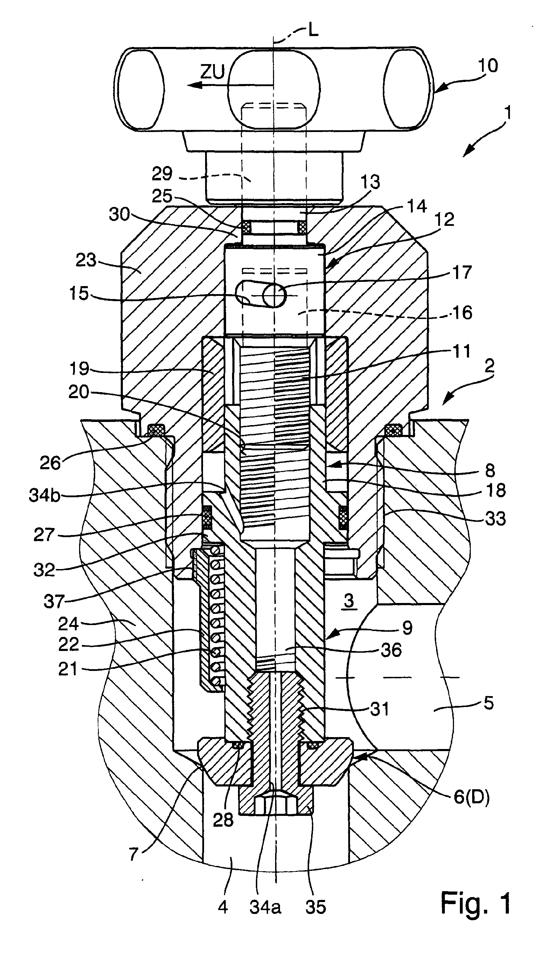

In Figur 1 ist eine Ausführungsform eines erfindungsgemäßen Ventiles 1 dargestellt, das in dieser Figur in der Dichtstellung D dargestellt ist.

Das Ventil 1 weist ein Gehäuse 2 auf, das im Beispielsfalle einen Stutzen 23 und ein unteres Gehäuseteil 24 aufweist. Der Stutzen 23 und das untere Gehäuseteil 24 sind über eine Gehäusegewindepaarung 33 miteinander verbunden. Der Stutzen 23 dient beispielsweise zur Sicherung des Ventiles in einem in Figur 1 nicht näher dargestellten Hydraulikblock.

Das Gehäuse 2 weist ferner einen Innenraum 3 auf, der eine stirnseitige Öffnung 4 und mindestens eine, in der Regel jedoch eine Mehrzahl seitlicher bzw. radialer Öffnungen 5 aufweist.

Im unteren Teil des Ventiles 1 ist ein Dichtkörper 6 vorgesehen, der im Beispielsfall als gehärtete Dichthalbkugel ausgebildet ist. Der Dichtkörper 6 ist in Figur 1 in seiner Dichtstellung D dargestellt, in der er an einem Dichtsitz 7 anliegt, und dabei die stirnseitige Öffnung 4 verschließt. Der Dichtsitz 7 ist bei der dargestellten Ausführungsform als Dichtkante ausgebildet. Der Dichtkörper 6 ist mittels einer Zylinderschraube 35 mit einem Kolben 9 verbunden, der hierfür ein Innengewinde 31 im unteren Teil seiner Mittelbohrung 36 aufweist. Die Zylinderschraube 35 wiederum weist eine erste Durchtrittsöffnung 34a auf, die mit der Mittelbohrung 36 des Kolbens 9 und mit einer zweiten Durchtrittsöffnung 34b in Strömungsverbindung steht.

Der Kolben 9 ist ein Teil einer Antriebseinrichtung 8 für den Dichtkörper 6, die neben dem Kolben 9 ein Betätigungselement 10 aufweist, das mit einer mit dem Kolben 9 zu dessen Bewegung in Wirkverbindung stehenden Gewindespindel 11 antriebsverbunden ist. Das Betätigungselement 10 ist im Beispielsfalle als Handrad ausgebildet, das auf einem Befestigungsabschnitt 29 eines Mitnehmers 13 angeordnet ist, dessen Funktion später näher beschrieben wird.

Um die zuvor genannten Teile abdichten zu können, sind O-Ringe 25, 26, 27 und 28 vorgesehen. Der O-Ring 25 schafft hierbei eine Dichtung zwischen dem Mitnehmer 13 und dem Stutzen 23, der O-Ring 26 schafft eine Dichtung zwischen den beiden Gehäuseteilen 23 und 24, der O-Ring 27 ist in einer Nut eines Dichtabatzes 32 zwischen dem Stutzen 23 und dem Kolben 9 angeordnet und der O-Ring 28 ist zwischen dem Dichtkörper 6 und dem unteren Ende des Kolbens 9 vorgesehen, wie sich dies im einzelnen aus der Darstellung der Figur 1 ergibt.

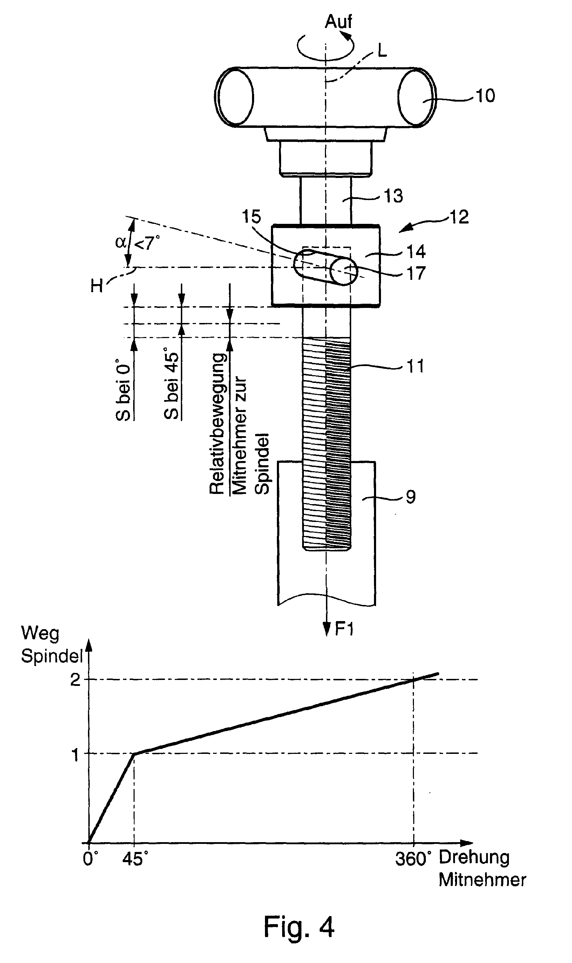

Figur 1 verdeutlicht ferner, dass das erfindungsgemäße Ventil 1 ein Zwischengetriebe 12 aufweist, das den Mitnehmer 13 umfasst, der an einem Ende über den Befestigungsabschnitt 29 mit dem Betätigungselement 10 antriebsverbunden ist und der an seinem anderen Ende mit einer Schaltwelle 14 versehen ist, die im Beispielsfalle als Hülse ausgebildet ist. Die Schaltwelle 14 weist mindestens eine Kulisse 15 auf, die in einem Winkel α (siehe Figur 4) zu einer Horizontalebene H angeordnet ist. Ein Stift 17, der auf einem gewindefreien Endabschnitt 16 einer Gewindespindel 11 befestigt ist, reicht in die Kulisse 15.

Die Gewindespindel 11 greift in ein Innengewinde 20 eines Führungsabschnittes 18 des Kolbens 9. Der Führungsabschnitt 18 ist im Beispielsfalle als Außen-Vierkant ausgebildet, der in eine Führungshülse 19 eingreift, die als komplementäres Teil im Beispielsfalle als Innen-Vierkant ausgebildet ist und im Stutzen 23 fixiert ist.

Schließlich zeigt Figur 1 eine Federhülse 22, die über eine Gewindepaarung 37 mit dem Stutzen 23 verschraubt ist und in der eine Druckfeder 21 angeordnet ist, die sich an ihrem oberen Ende an der Unterseite des Dichtabsatzes 32 des Kolbens 9 zum Ausgleich von Axialspiel abstützt.

In der in Figur 1 dargestellten Dichtstellung D des Dichtkörpers 6 liegt die über den Endabschnitt 16 gestülpte hülsenförmige Schaltwelle 14 an einem Sicherungsbund 30 an. In diesem Zustand kann es zu einem Verkeilen des Ventils kommen, wenn bei geschlossenem Ventil der vorher auf die untere Seite des Dichtkörpers 6 und hintere Seite des Kolbens 9 wirkende Druck abfällt.

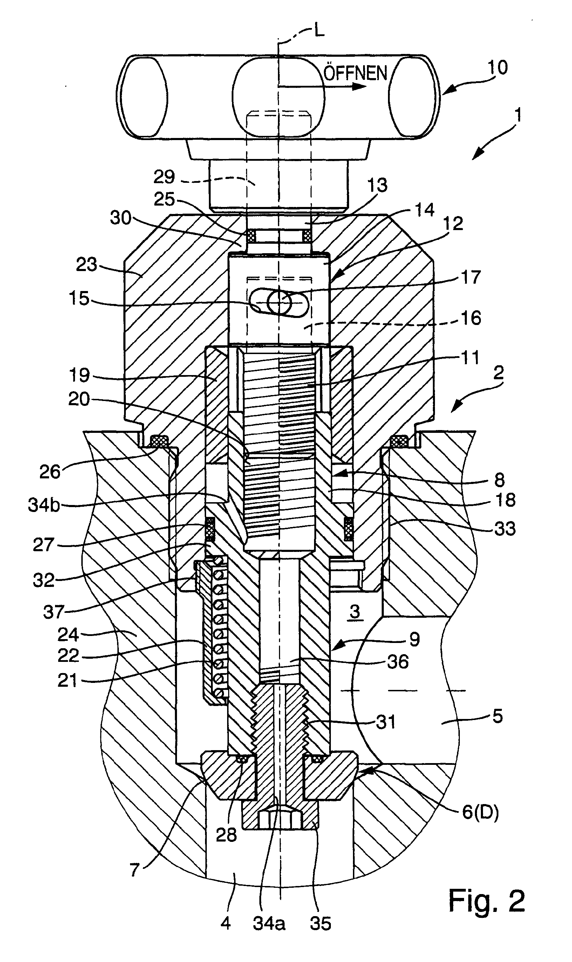

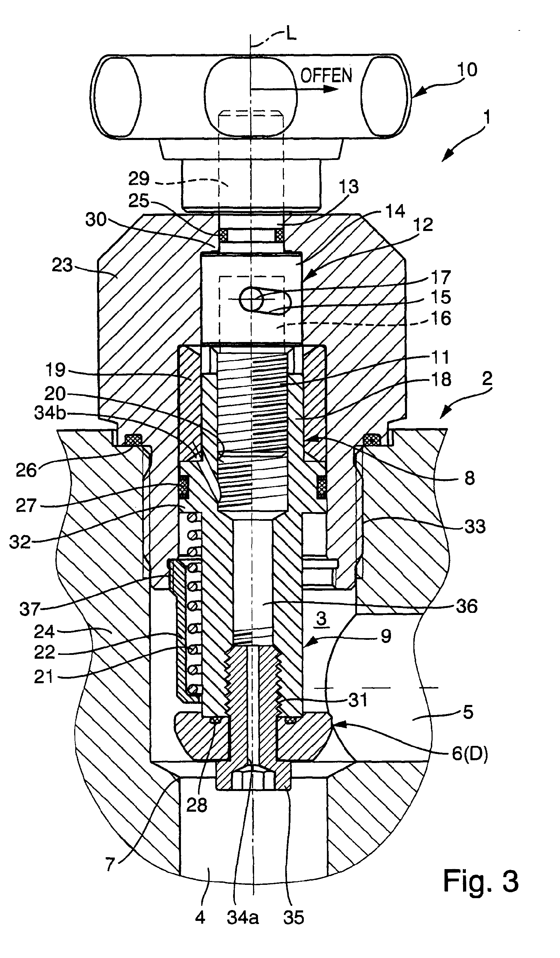

Soll das Ventil 1 geöffnet werden, was in den Figuren 1 bis 3 von der Schließstellung D über eine Zwischenstellung in Figur 2 bis hin zur Offenstellung O in Figur 3 dargestellt ist, wird das Betätigungselement 10 im Beispielsfalle von Hand in Richtung auf die Offenstellung gedreht, wodurch der Stift 17 in der Kulisse 15 von der in Figur 1 gestellten Stellung allmählich in die in Figur 3 dargestellte Stellung 3 gleitet.

Das Wirkprinzip des Zwischengetriebes 12 ist anhand der schematisch vereinfachten Darstellung der Figur 4 verdeutlicht, in der gleiche Bezugsziffern die gleichen Teile wie in den Figuren 1 bis 3 darstellen.
Bei stirnseitigem Druck wird der Kolben 9 umspült und die Schaltwelle 14 des Zwischengetriebes 12 wird nach außen an den in den Figuren 1 bis 3 dargestellten Sicherungsbund 30 gepresst.

Wird das Ventil 1 mittels des Betätigungselementes 10 geschlossen, wird das axiale Spiel der beweglichen Teile aufgehoben. Bei Druckentlastung will sich dieses axiale Spiel wieder einstellen und wie durch den vorherigen Druck auf die Schaltwelle 14 aufgebrachte Kraft wirkt nun auf die Gewindegänge der Gewindespindel 11 und den Dichtsitz 7. Durch die Neigung der Kulisse 15 um den Winkel α gegenüber der Horizontalen H bzw. den Komplementärwinkel gegenüber der Längsachse L wird beim Öffnen des Ventiles durch Drehung des Betätigungselementes 10 diese Kraft aufgehoben und die Gewindegänge 11 der Gewindespindel 11 entspannt. Somit lässt sich das erfindungsgemäße Ventil 10 leicht öffnen.

### Zusammenstellung der Bezugszeichen

- 1: Ventil
- 2: Gehäuse
- 3: Innenraum
- 4: stirnseitige Öffnung
- 5: seitliche Öffnungen
- 6: Dichtkörper
- 7: Dichtsitz
- 8: Antriebseinrichtung
- 9: Kolben
- 10: Betätigungselement
- 11: Gewindespindel
- 12: Zwischengetriebe
- 13: Mitnehmer
- 14: Schaltwelle
- 15: Kulisse
- 16: Endabschnitt
- 17: Stift
- 18: Führungsabschnitt
- 19: Führungshülse
- 20: Innengewinde
- 21: Druckfeder
- 22: Federhülse
- 23: Stutzen
- 24: unteres Gehäuseteil
- 25 - 28: O-Ringe
- 29: Befestigungsabschnitt
- 30: Sicherungsbund
- 31: Innengewinde
- 32: Dichtabsatz
- 33: Gehäusegewindepaarung
- 34a, 34b: Durchtrittsöffnungen
- 35: Zylinderschraube
- 36: Mittelbohrung

## Patentansprüche

1. Ventil (1)
- mit einem Gehäuse (2), das einen Innenraum (3) mit einer stirnseitigen Öffnung (4) und zumindest einer seitlichen Öffnung (5) aufweist,
- mit einem Dichtkörper (6), der im Innenraum (3) zwischen einer Dichtstellung (D), in der er an einem Dichtsitz (7) unter Verschluss der stirnseitigen Öffnung (4) anliegt, und einer Offenstellung (O) bewegbar angeordnet ist, und
- mit einer Antriebseinrichtung (8) für den Dichtkörper (6), die einen Kolben (9), an dem der Dichtkörper (6) befestigt ist, und ein Betätigungselement (10) aufweist, das mit einer mit dem Kolben (9) zu dessen Bewegung in Wirkverbindung stehenden Gewindespindel (11) antriebsverbunden ist,
**dadurch gekennzeichnet,**
- **dass** zwischen dem Betätigungselement (10) und der Gewindespindel (11) ein Zwischengetriebe (12) angeordnet ist, das zum Abheben des Dichtkörpers (6) von der Dichtstellung (D) in Richtung auf die Offenstellung (O) eine Relativbewegung in Richtung der Längsachse (L) der Gewindespindel (11) zwischen dem Betätigungselement (10) und der Gewindespindel (11) erzeugt.

2. Ventil nach Anspruch 1, **dadurch gekennzeichnet, dass** das Zwischengetriebe (12) einen Mitnehmer (13) aufweist, der an einem Ende mit dem Betätigungselement (10) antriebsverbunden ist, und der an seinem anderen Ende mit einer Schaltwelle (14) versehen ist, die zumindest eine Kulisse (15) aufweist, die in einem spitzen Winkel (α) zu einer Horizontalebene (H) angeordnet ist und in der ein mit der Gewindespindel (11) verbundener Stift (17) angeordnet ist.

3. Ventil nach Anspruch 2, **dadurch gekennzeichnet, dass** die Schaltwelle (14) als Hülse ausgebildet ist, die auf einem glatten gewindefreien Endabschnitt (16) der Gewindespindel (11) aufgesetzt ist.

4. Ventil nach Anspruch 2 oder 3, **dadurch gekennzeichnet, dass** der Winkel (β) kleiner gleich 7 ° beträgt.

5. Ventil nach Anspruch 3 oder 4, **dadurch gekennzeichnet, dass** zwei Kulissen (15) auf gegenüberliegenden Seiten der Schaltwelle (14) vorgesehen sind und der Stift (17) den Endabschnitt (16) senkrecht zur Längsachse (L) der Gewindespindel (11) durchgreift.

6. Ventil nach einem der Ansprüche 1 bis 5, **dadurch gekennzeichnet, dass** der Kolben (9) einen vieleckigen Führungsabschnitt (18) aufweist, der in einer komplementär ausgebildeten Führungsbuchse (19) geführt ist, die im Gehäuse (2) fixiert ist.

7. Ventil nach Anspruch 6, **dadurch gekennzeichnet, dass** die Gewindespindel (11) in ein Innengewinde (20) des Führungsabschnittes (18) eingreift.

8. Ventil nach einem der Ansprüche 1 bis 7, **dadurch gekennzeichnet, dass** der Dichtkörper (6) als gehärtete Halbkugel ausgebildet ist.

9. Ventil nach einem der Ansprüche 1 bis 8, **dadurch gekennzeichnet, dass** eine Druckfeder (21) zwischen dem Gehäuse (2) und dem Kolben (9) angeordnet ist.

10. Ventil nach einem der Ansprüche 1 bis 9, **dadurch gekennzeichnet, dass** zwischen der stirnseitigen Öffnung (4) und einer Mittelbohrung (36) des Kolbens (9) eine Fluid-Durchtrittsöffnung (34) vorgesehen ist.
